# EUROPÄISCHE PATENTSCHRIFT

(11) **EP 2 676 750 B1**
(45) Veröffentlichungstag und Bekanntmachung des Hinweises auf die Patenterteilung: **09.10.2019**
(21) Anmeldenummer: 12172509.7
(22) Anmeldetag: 19.06.2012
(51) Int. Cl.: B23D 9/00, B23K 37/053, B23D 79/06, B23D 79/10, B23K 31/02, B23K 101/06, B23D 21/04

(54) **Vorrichtung zum Führen von Schälgeräten**
Device for guiding peeling devices
Dispositif de guidage d'appareils à écorcer

(43) Veröffentlichungstag der Anmeldung: 25.12.2013
(73) Patentinhaber: Georg Fischer Wavin AG, 8201 Schaffhausen (CH)
(72) Erfinder: Hogg, Christian, 79879 Wutach (DE); Mayer, Karl-Heinz, 78224 Singen (DE); Tinius, Michael, 89073 Ulm (DE)
(74) Vertreter: Fenner, Seraina

(56) Entgegenhaltungen:
- EP-A1- 0 427 453
- EP-A2- 1 854 578
- WO-A1-98/17980
- WO-A1-2011/073660
- US-A- 2 291 395
- US-A- 5 081 768
- US-B1- 6 244 189
- US-B1- 7 089 668

## Beschreibung

Die Erfindung betrifft eine Vorrichtung zum Führen von Schälgeräten, wobei die Vorrichtung am Aussenumfang des zu bearbeitenden Rohres anzuordnen ist, gemäß dem Oberbegriff des Anspruchs 1. Eine solche Vorrichtung ist aus US 5 081 768 A bekannt.

An Kunststoffrohren bzw. Kunststoffrohrleitungen werden oft Nachbearbeitungen durchgeführt, welche dem Anschliessen von weiteren Leitungen bzw. Abzweigungen dienen.

Beispielsweise zum Anbringen von Abzweigungsstutzen oder Sattelstücken, welche an die Hauptleitung angeschweisst werden, ist es notwendig die äussere Oberfläche der Rohres an der Schweissstelle abzuschaben um Schmutzeinschlüsse aus dem Herstellungsprozess oder auch alterungsbedingte Materialveränderungen die bspw. durch UV-Schädigung oder Witterung an der Oberfläche des Rohres auftreten können, zu entfernen.

Des Weiteren bildet sich während der Lagerung von Kunststoffrohren eine Oxidhaut. Eine Oxidhaut ist für eine Verschweissung von Rohren ebenso störend, da eine Verschweissung ohne Entfernung der Oxidhaut durch Abschaben zu einer undichten Schweissnaht führen kann.

Eine Bearbeitung der äusseren Oberfläche eines Kunststoffrohres vor der Weiterverarbeitung insbesondere vor einer Verschweissung ist zur Erzielung einer den Anforderungen entsprechenden Schweissung unverzichtbar.

Ebenso kann es der Fall sein, dass als Nacharbeit in die Hauptleitung eine Bohrung vorzusehen ist um entsprechende Abzweigungsstutzen anzubringen.

Die EP 10306 149 B1 offenbart ein Schälgerät für rohrförmige Gegenstände mit mindestens einer Abstützung zum Abstützen des zu schälenden Gegenstandes, einer Schäleinheit die einen Schälkopf aufweist, einer Führungsbaugruppe und einer Tageinheit. Der Schälkopf ist um eine Achse schwenkbar, wodurch ein regelmässiges Abschälen des Rohres erzielt wird, ohne dass ungeschälte Stellen zurückbleiben.

Nachteilig an diesem Schälgerät ist, dass es sich nur für eine Durchmesserdimension einsetzen lässt. Zur Schälung von Rohrleitungen mit weiteren bzw. anderen Durchmesserdimensionen muss die Abstützung am Schälgerät durch eine dem Durchmesser entsprechende Abstützung ausgewechselt werden.

Die EP 1 487 600 B1 offenbart eine Schälvorrichtung, die sich für unterschiedliche Rohrdurchmesser eignet. Die Vorrichtung wird um den Rohrumfang montiert und anschliessend um den Umfang rotiert, wodurch das Abschälen des Rohres erfolgt. Dieses Schälgerät eignet sich nur für Kunststoffrohre die einen kleineren Durchmesser aufweisen, welche noch handhabbar sind. Es eignet sich nicht für gross dimensionierte Kunststoffrohre, welche beispielsweise für Gasleitungen verwendet werden.

Die DE 20 2007 016 022 U1 beschreibt ein Schälgerät für grossdimensionierte Kunststoffrohre. Das Schälgerät wird mittels einer Gliederkette und einer Spanngurte um den Rohrumfang gespannt. Ein Anschlag zur Stirnseite hin definiert die Position des Schälgeräts. Der Elektrohobel, welcher als Schälgerät verwendet wird, geführt durch den Anschlag und stabilisiert durch die Gliederkette, wird über die Oberfläche des Rohres geschoben bzw. gedreht.

Nachteilig an diesem Schälgerät ist, dass es sich nur für Bearbeitungen am Rand eines Rohres eignet und nicht inmitten einer verlegter Rohrleitung, da das Gerät eines Anschlags bedarf, der an der Rohrstirnseite anliegt und dadurch den Abstand vorgibt und die Führung des Hobels übernimmt.

Nachteilig an den oben erwähnten Offenbarungen ist auch, dass die Vorrichtungen jeweils nur für eine Anwendung nämlich für das Schälen der Rohre eingesetzt werden können. Für weitere Bearbeitungen wie bspw. eine Bohrung in ein Kunststoffrohr vorzusehen bedarf es einer anderen Vorrichtung.

Es ist Aufgabe der Erfindung eine Vorrichtung vorzuschlagen, welche sich für Rohrdurchmesser von 300 bis 2000mm eignet ohne jeglichen Umbau an der Vorrichtung vornehmen zu müssen. Zudem sollen verschiedene Rohrbearbeitungsgeräte an der Vorrichtung montierbar sein um mit derselben Vorrichtung unterschiedliche Bearbeitungen ausführen zu können. Beim Einsatz eines Schälgeräts in Kombination mit der vorliegenden Erfindung soll durch die Verwendung der vorliegenden Erfindung eine gleichmässige, konstante Schälung erzielt werden. Auch bei ovalen Rohren ist durch die erfindungsgemässe Vorrichtung sicherzustellen, dass die Abtragungstiefe des abgeschälten Kunststoffs gleich tief ist.

Diese Aufgabe wird erfindungsgemäss durch die Vorrichtung des Anspruchs 1 gelöst. Die Bänder weisen einen flachen rechteckeigen Querschnitt auf. Vorzugsweise sind die Bänder aus einem Federstahl hergestellt, wobei auch andere metallische Werkstoffe dankbar sind. Ebenso eignen sich Kunststoffbänder oder faserverstärkte Kunststoffbänder. Die Bänder müssen die Eigenschaft aufweisen, dass sie sich passgenau dem Umfang des Rohres anschmiegen, das heisst, dass sie sich problemlos entlang des Umfangs des Rohres legen. Wobei die Bänder sich für Rohre mit Durchmessern von 300-2000mm eignen und daher Durchmesserübergreifend einsetzbar sind. Die beiden Bänder sind vorzugsweise aus demselben Material hergestellt. Die Bänder haben die Eigenschaft, dass sie Torsionssteif sind, was bedeutet, dass sie sich entlang ihrer Länge kaum verwinden lassen, weder im gestreckten Zustand noch im montierten Zustand. Jedoch weisen die Bänder eine hohe Flexibilität entlang ihrer Länge auf bzw. sie lassen sich gut elastisch verformen bzw. biegen. Des Weiteren muss das eingesetzte Material eine hohe Zugfestigkeit aufweisen.

Die Bänder sind an ihren Enden mit einem Träger verbunden. Der Träger verläuft rechtwinklig zu den Bändern und verbindet sie miteinander. Die beiden Enden der parallel verlaufenden Bänder, welche sich nebeneinander befinden, sind über einen Träger miteinander verbunden. Dadurch wird eine Art Rahmen gebildet, der sich um den Umfang des zu bearbeitenden Kunststoffrohres legen lässt. Durch die Anschmiegsamkeit der Bänder ist die vorliegende Erfindung für unterschiedliche Rohrdurchmesser einsetzbar. Wie bereits zuvor erwähnt eignet sich die vorliegende Erfindung für Kunststoffrohre die einen Durchmesser aufweisen, der im Bereich zwischen 300-2000mm liegt.

Die trägerverbundenen Bänder und die Torsionssteifigkeit der Bänder macht den Rahmen in sich steif bzw. torsionssteif. Die Flexibilität des Rahmens besteht nur noch in der Anschmiegsamkeit der Bänder an den Umfang des Rohres. Als Träger wird vorzugsweise ein Stahl-oder Aluminiumprofil verwendet. Die Verbindung der Bandenden mit dem Träger wird vorzugsweise durch eine Trägeraufnahme gebildet. Der Träger wird am jeweiligen Ende mit einer Trägeraufnahme verbunden, vorzugsweise durch verschrauben, dadurch kann die erfindungsgemässe Vorrichtung zu Transportzwecken in ihre Einzelteile zerlegt und vor ihrem Einsatz wieder zusammengebaut werden. Die Bänder werden ebenfalls mit der Trägeraufnahme verbunden, wodurch der Rahmen gebildet wird. Es besteht auch die Möglichkeit die Bänder direkt am Träger zu befestigen ohne die Verwendung einer Trägeraufnahme.

Da die Bänder als Führung eines Rohrbearbeitungsgeräts dienen, ist es zweckmässig, dass sie nicht direkt am Umfang des zu bearbeitenden Rohrs anliege, damit das Rohrbearbeitungsgerät auch entsprechend an den Bändern befestigt werden kann. Zur Distanzierung der Bänder vom äusseren Umfang des Rohres sind an der Bandunterseite Distanzelemente angeordnet. Die Distanzelemente weisen vorzugsweise eine zylindrische Form auf, wobei auch Distanzelemente eingesetzt werden können, welche eine andere Form aufweisen. Wichtig hierbei ist, dass die Bänder immer denselben Abstand zum äusseren Umfang bzw. der Oberfläche des Rohres haben, das wiederum garantiert ein gleichmässiges Abschaben der Oberfläche durch ein Schälgerät auch wenn das Rohr eine ovale Form aufweist.

Vorteilhaft ist es, wenn die Distanzelemente eine geringere Länge aufweisen als die Bänder breit sind. Dadurch kann das entsprechend montierte Rohrbearbeitungsgerät optimal geführt werden in dem die Bänder vom Gerät bzw. Schlitten umschlungen und so durch eine formschlüssige Verbindung exakt geführt sind.

Der durch die Bänder, Träger und vorzugsweise Trägeraufnahmen gebildete Rahmen wird vorzugsweise mittels einer Spannvorrichtung am Aussenumfang des zu bearbeitenden Rohres befestigt. Als einfache und kostengünstige Lösung können Zurrgurte zur Befestigung verwendet werden. Die Zurrgurte werden an den Trägeraufnahmen befestigt bzw. direkt an den Trägern wenn keine Trägeraufnahmen eingesetzt wurden. Durch Festziehen der Zurrgurte wird der Rahmen um den Umfang des Rohres gespannt, so dass sich die Bänder, beabstandet durch die Distanzelemente, entlang des Umfangs legen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine 3D-Ansicht einer am äusseren Umfang eines Rohres montierten erfindungsgemässen Vorrichtung,
- Fig. 2: ein 3D-Ansicht einer erfindungsgemässen Vorrichtung mit Schlitten,
- Fig. 3: eine Schnittansicht durch einen auf einem Band angeordneten Schlitten,
- Fig. 4: eine 3D-Ansicht einer erfindungsgemässen Vorrichtung mit einem Schälgerät als Rohrbearbeitungsgerät und
- Fig. 5: eine 3D-Ansicht einer nicht erfindungsgemässen Vorrichtung wobei die Vorrichtung als Spannrahmen eingesetzt wird.

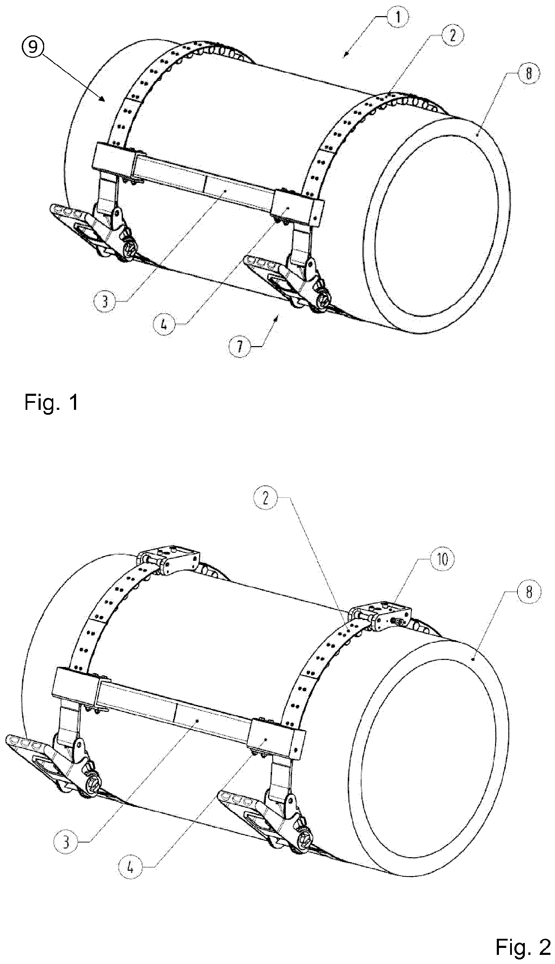

In Fig. 1 ist die erfindungsgemässe Vorrichtung am Umfang montiert dargestellt. Die beiden Bänder 2, welche vorzugsweise aus Federstahl sind, passen sich dem Verlauf des Umfangs des Rohres 8 an. Das Material der Bänder 2 ist so gewählt, dass es eine hohe Zugfestigkeit aufweist sowie torsionssteif ist, das heisst, dass sich die Bänder 2 entlang ihrer Länge kaum verwinden lassen, jedoch passen sie sich dem Umfang des Rohres 8 durch ihre hohe Flexibilität entlang ihrer Länge problemlos an. Durch die an der Bandunterseite 6 angeordneten Distanzelemente 5 hat das Band einen konstanten Abstand zum Aussenumfang des Rohres 8 bzw. zu dessen Oberfläche. Die beiden Bänder 2 der Vorrichtung verlaufen parallel zueinander. Die Bandenden der beiden Bänder 2, welche auf derselben Seite des Umfangs sind bzw. welche sich nebeneinander befinden, werden jeweils durch einen Träger 3 miteinander verbunden. Die Vorrichtung 1 bildet dadurch eine Art Rahmen 9 der zur Bearbeitung des Rohres 8 über den Aussenumfang des Rohres 8 gelegt wird. Wie aus Fig. 1 ersichtlich ist, passen sich die Bänder 2 genau dem Verlauf des Umfangs des Rohres 8 an. Dadurch ist der Abstand vom Band 2 zum Umfang des Rohres 8, welcher durch die Distanzelemente 5 erzeugt wird an jeder Stelle gleich gross. Bei Verwendung eines Schälgeräts 11 in Kombination mit der erfindungsgemässen Vorrichtung 1 wird dadurch gewährleistet, dass an jeder Stelle des Abschältiefe gegeben ist, zudem können ungeschälte Bereiche vermieden werden auch bei Rohren 8 die eine ovale Form aufweisen. Vorzugsweise sind die Bandenden über eine Trägeraufnahme 4 mit dem jeweiligen Träger 3 verbunden.

Alternativ können die Bandenden auch direkt am Träger 3 angebracht werden. Am Träger 3, welche vorzugsweise durch ein Stahl-oder Aluminiprofil gebildet wird, sind an beiden Enden Trägeraufnahmen 4 angeordnet, die ein Verbinden der Bänder 2 mit dem jeweiligen Träger 3 ermöglichen. Die Trägeraufnahmen 4 sind vorzugsweise mit den Trägern 3 verschraubt. Durch die Verbindung der Bänder 2 und der Träger 3 miteinander zu einer Art Rahmen 9, welcher über den Umfang eines Rohres 8 gelegt und mittels Spanneinrichtung befestigt wird, wird eine Steifigkeit der Vorrichtung erreicht, die es ermöglicht Rohrbearbeitungsgeräte insbesondere Schälgeräte 11 an der Vorrichtung 1 anzubringen, die während ihres Einsatzes weder verkannten noch ungewollt vom Aussenumfang des Rohres 8 abheben. Fig. 2 zeigt die optimale Schlittenführung der Schlitten 10 auf welchen ein Rohrbearbeitungsgerätes befestigt werden kann. Die Schlittenführung verläuft entlang der Bänder 2, welche durch ihr Material, ihre Trägerverbindung und das Befestigen mittels Spanneinrichtung starr und parallel zum Umfang laufen. Die Befestigung der erfindungsgemässen Vorrichtung 1 am Aussenumfang des Rohres 8 wird durch eine Spannvorrichtung umgesetzt, vorzugsweise durch zwei Zurrgurte 7, welche am Rahmen 9 befestigt sind. Die Zurrgurte 7 werden in der dargestellten Ausführungsform in Fig. 1 an den Trägeraufnahmen 4 befestigt, können aber auch falls keine Trägeraufnahmen 4 vorhanden sind direkt am Träger 3 angebracht werden.
Mithilfe einer Ratsche oder einem alternativen Spanngerät, wird der Rahmen 9 am Aussenumfang der zu bearbeitenden Rohrleitung 8 befestigt.

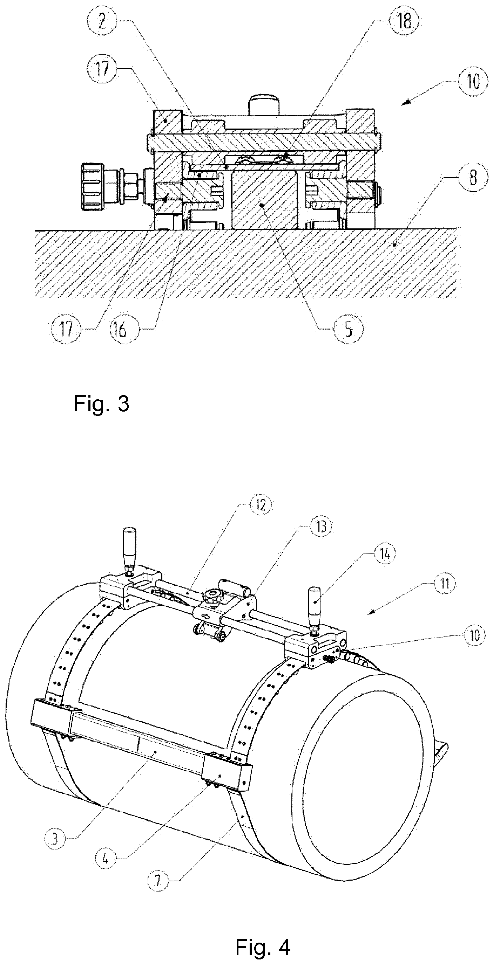

In Fig. 2 ist die erfindungsgemässe Vorrichtung 1 mit den Schlitten 10 dargestellt, welche auf die Bänder 2, die als Führung der Schlitten 10 dienen, montiert sind. Auf den Schlitten wird das entsprechende Rohrbearbeitungsgerät positioniert und befestigt. Als mögliche Ausführungsform ist in Fig. 4 ein Schälgerät 11 abgebildet welches auf den Schlitten 10 montiert ist. Es besteht auch die Möglichkeit andere Rohrbearbeitungsgeräte auf den Schlitten 10 zu befestigen, bspw. um Bohrungen in Rohren 8 vorzusehen.

Fig. 3 zeigt eine Schnittansicht durch einen auf dem Band 2 befestigten Schlitten 10. Die Distanzelemente 5 sind an der Bandunterseite 6 befestigt und sind vorzugsweise als zylindrischer Körper ausgebildet, jedoch können auch anders geformte Körper als Distanzelement 5 eingesetzt werden. Die Distanzelemente 5 sind durch regelmässige Abstände zueinander an der Bandunterseite 6 durch Befestigungsmittel 18 angeordnet. Die Distanzelemente 5 erstrecken sich vorzugsweise nicht über die gesamte Breite des Bands 2. Dadurch kann der Schlitten 10 optimal geführt werden indem die auf den Achsen 15 angeordneten Laufrollen 16 des Schlittens 10 an den beiden Rändern der Bandunterseite 6 zur Führung angeordnet sind bzw. der Schlitten 10 umschliesst das Band 2 formschlüssig. Dadurch ist der Schlitten 10 axial geführt. Die Achsen 15 sind im Grundgestell 17 des Schlittens 10 vorzugsweise durch verschrauben befestigt.

Fig. 4 zeigt die erfindungsgemässe Vorrichtung 1 an welcher ein Schälgerät 11 als Beispiel für ein Rohrbearbeitungsgerät angeordnet ist. Es besteht auch die Möglichkeit andere Rohrbearbeitungsgeräte an der erfindungsgemässen Vorrichtung 1 anzubringen um beispielsweise Bohrungen in ein Rohr 8 vorzusehen. Das Schälgerät 11 weist zwei Schlitten 10 auf, welche entlang der Bänder 2 geführt sind. Die Schlitten 10 sind über zwei Verbindungsachsen 12 miteinander verbunden. Auf den Verbindungsachsen 12 ist ein Hobel 13 angeordnet, der sich entlang der Verbindungsachsen 12 verschieben und an der gewünschten Position fixieren lässt, um dann das Schälgerät 11 entlang des Umfangs zu bewegen bzw. zu schwenken um eine Schälung durchzuführen. Die Griffe 14 dienen dazu, das Schälgerät 11 entlang des Umfangs des Rohres 8 zu schieben. Durch die erfindungsgemässen Vorrichtung 1 wird eine starre Führung des Rohrbearbeitungsgerätes bzw. Schälgeräts 11 erzielt, dadurch wird ein Abheben und Verkanten des Hobels 13 bzw. des kompletten Schälgeräts 11 bzw. eines Rohrbearbeitungsgeräts vermieden. Der Hobel 13 hat dadurch immer denselben Abstand zum Umfang bzw. der Oberfläche des Rohres 8 auch im Fall einer Ovalität. Der Hobel 13 wird nach einer Schwenkung über einen Bereich des Umfangs, welcher sich maximal von Träger 3 zu Träger 3 erstreckt, axial entlang der Verbindungsachen 12 verschoben um eine weitere Schälung vorzunehmen. Der Schälvorgang läuft radial ab, wodurch eine Aneinanderreihung von geschälten Bahnen erfolgt bis der gewünschte Bereich geschält ist. Bei grösseren Bereichen besteht die Möglichkeit die Vorrichtung 1 entlang der Rohrleitung 8 zu versetzen.

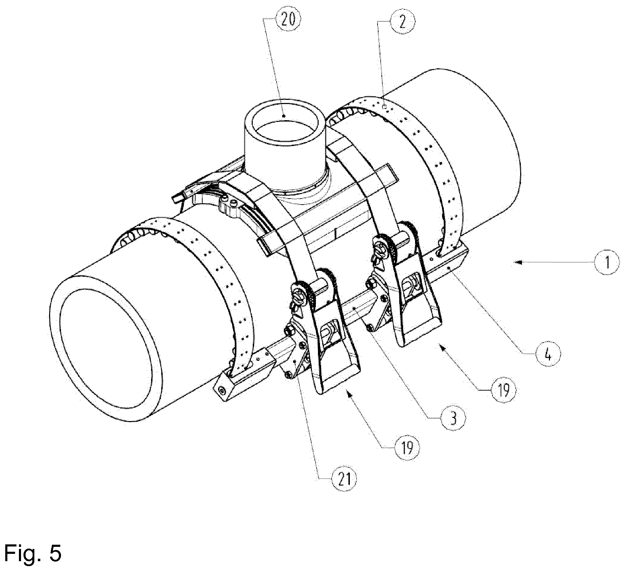

Fig. 5 zeigt eine weitere Einsatzmöglichkeit einer nicht erfindungsgemässen Vorrichtung.

Die Vorrichtung 1 wird in Fig. 5 als Spannrahmen eingesetzt, dazu werden an der am Umfang des Rohres 8 montierten Vorrichtung 1 zwei Spannelemente 19 vorzugsweise Zurrgurte befestigt, welche den zu verschweissenden Fitting 20 am Rohr 8 fixieren. Die Spannelemente 19 sind vorzugsweise am Träger 3 befestigt, was den Vorteil mit sich bringt, dass die Spannelemente 19 nicht um den kompletten Rohrumfang gelegt werden müssen, sondern einfach und schnell mithilfe von Laschen 21 an den Trägern 3 montiert werden können.

### Bezugszeichenliste

- 1: Vorrichtung
- 2: Band
- 3: Träger
- 4: Trägeraufnahme
- 5: Distanzelement
- 6: Bandunterseite
- 7: Zurrgurte
- 8: Rohr
- 9: Rahmen
- 10: Schlitten
- 11: Schälgerät
- 12: Verbindungsachse
- 13: Hobel
- 14: Griff
- 15: Achse
- 16: Laufrolle
- 17: Grundgestell
- 18: Befestigungsmittel
- 19: Spannelement
- 20: Fitting
- 21: Lasche

## Patentansprüche

1. Vorrichtung (1) zum Führen -von Schälgeräten (11), wobei die Vorrichtung (1) am Aussenumfang des zu bearbeitenden Rohres (8) anzuordnen ist, **dadurch gekennzeichnet, dass** die Vorrichtung (1) mindestens zwei parallel verlaufende torsionssteife Bänder (2) zur Führung der Schlitten aufweist, mit einem ersten Schlitten (10) der am ersten Band (2) geführt und montiert und einem zweiten Schlitten (10) der am zweiten Band (2) geführt und montiert ist, wobei die Schlitten (10) der Befestigung eines Schälgeräts dienen.

2. Vorrichtung (1) nach Anspruch 1, **dadurch gekennzeichnet, dass** die Bänder (2) aus einem metallischen Werkstoff sind, vorzugsweise aus Federstahl.

3. Vorrichtung (1) nach Anspruch 1, **dadurch gekennzeichnet, dass** die Bänder (2) an ihren Enden mit einem Träger (3) verbunden sind.

4. Vorrichtung (1) nach einem der Ansprüche 1 oder 2, **dadurch gekennzeichnet, dass** die nebeneinander liegenden Enden der beiden parallel verlaufenden Bänder (2) mit demselben Träger (3) verbunden sind.

5. Vorrichtung (1) nach einem der Ansprüche 3 oder 4, **dadurch gekennzeichnet, dass** die Bänder (2) über eine Trägeraufnahme (4) am Träger (3) befestigt sind.

6. Vorrichtung (1) nach Anspruch 1, **dadurch gekennzeichnet, dass** an der Bandunterseite (6) der Bänder (2) Distanzelemente (5) angeordnet sind, wobei die Distanzelemente (5) vorzugsweise eine zylindrische Form aufweisen.

7. Vorrichtung (1) nach einem der vorangehenden Ansprüche, **dadurch gekennzeichnet, dass** die Vorrichtung (1) mittels Spannvorrichtung vorzugsweise einer Zurrgurte (7) am Umfang eines zu bearbeitenden Rohres (8) befestigbar ist.

## Claims

1. Apparatus (1) for guiding planing devices (11), wherein the apparatus (1) is to be arranged on the outer circumference of the tube (8) to be processed, **characterized in that** the apparatus (1) has at least two bands (2), which are stiff against torsion and extend in parallel, for guiding the slides, having a first slide (10) which is guided and mounted on the first band (2) and a second slide (10) which is guided and mounted on the second slide (2), wherein the slides (10) serve to fasten a planing device.

2. Apparatus (1) according to Claim 1, **characterized in that** the bands (2) are of a metallic material, preferably spring steel.

3. Apparatus (1) according to Claim 1, **characterized in that** the bands (2) are connected at their ends by way of a carrier (3).

4. Apparatus (1) according to either of Claims 1 and 2, **characterized in that** the ends, lying side by side, of the two bands (2) which extend in parallel are connected by way of the same carrier (3).

5. Apparatus (1) according to either of Claims 3 and 4, **characterized in that** the bands (2) are fastened on the carrier (3) by means of a carrier accommodating means (4).

6. Apparatus (1) according to Claim 1, **characterized in that** spacers (5) are arranged on the band underside (6) of the bands (2), wherein the spacers (5) are preferably in the form of a cylinder.

7. Apparatus (1) according to one of the preceding claims, **characterized in that** the apparatus (1) is fastenable by means of a tensioning device, preferably a lashing strap (7), on the circumference of a tube (8) to be processed.

## Revendications

1. Dispositif (1) destiné à guider des unités de rabotage (11), le dispositif (1) étant destiné à être disposé à la périphérie extérieure d'un tube (8) à usiner, **caractérisé en ce que** le dispositif (1) comporte au moins deux bandes parallèles (2) rigides en torsion destinées à guider les chariots comprenant un premier chariot (10) guidé et monté sur la première bande (2) et un deuxième chariot (10) guidé et monté sur la deuxième bande (2), les chariots (10) servant à fixer une unité de rabotage.

2. Dispositif (1) selon la revendication 1, **caractérisé en ce que** les bandes (2) sont un matériau métallique, de préférence en acier à ressort.

3. Dispositif (1) selon la revendication 1, **caractérisé en ce que** les bandes (2) sont reliées, à leurs extrémités, à un support (3).

4. Dispositif (1) selon l'une des revendications 1 et 2, **caractérisé en ce que** les extrémités adjacentes des deux bandes parallèles (2) sont reliées au même support (3) .

5. Dispositif (1) selon l'une des revendications 3 et 4, **caractérisé en ce que** les bandes (2) sont fixées au support (3) par le biais d'un réceptacle de support (4).

6. Dispositif (1) selon la revendication 1, **caractérisé en ce que** des éléments d'espacement (5) sont disposés du côté inférieur (6) des bandes (2), les éléments d'espacement (5) ayant de préférence une forme cylindrique.

7. Dispositif (1) selon l'une des revendications précédentes, **caractérisé en ce que** le dispositif (1) peut être fixé à la périphérie d'un tube à usiner (8) au moyen d'un dispositif de serrage, de préférence d'une sangle d'arrimage (7).
